(19) Europäisches Patentamt
European Patent Office
Office européen des brevets

(11) **EP 2 011 211 B1**

(12) **EUROPÄISCHE PATENTSCHRIFT**

(45) Veröffentlichungstag und Bekanntmachung des Hinweises auf die Patenterteilung:
**16.06.2010   Patentblatt 2010/24**

(21) Anmeldenummer: **07702901.5**

(22) Anmeldetag: **19.01.2007**

(51) Int Cl.:
*H02J 9/02* ^(2006.01)

(86) Internationale Anmeldenummer:
**PCT/EP2007/000472**

(87) Internationale Veröffentlichungsnummer:
**WO 2007/121799 (01.11.2007 Gazette 2007/44)**

(54) **LADESCHALTUNG FÜR NOTLICHT**

CHARGING CIRCUIT FOR EMERGENCY LIGHT

CIRCUIT DE CHARGE POUR UNE LUMIÈRE DE SECOURS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2006  DE 102006018531**
**03.07.2006  DE 102006030655**

(43) Veröffentlichungstag der Anmeldung:
**07.01.2009   Patentblatt 2009/02**

(73) Patentinhaber: **TridonicAtco GmbH & Co. KG**
**6851 Dornbirn (AT)**

(72) Erfinder:
• **WALHEAD, Geoff**
**County Durham DL5 5HL (GB)**
• **DIXON, Dave**
**Tyne & Wear, NE28 9QZ (GB)**
• **ROHNER, Daniel**
**1220 Wien (AT)**
• **MAIR, Alexander**
**1220 Wien (AT)**

(74) Vertreter: **Rupp, Christian**
**Mitscherlich & Partner**
**Patent- und Rechtsanwälte**
**Sonnenstraße 33**
**80331 München (DE)**

(56) Entgegenhaltungen:
**US-A- 5 646 502        US-A- 5 847 550**
**US-E1- R E38 183**

EP 2 011 211 B1

**Beschreibung**

Die vorliegende Erfindung betrifft ein Gerät gemäß dem Oberbegriff des Anspruchs 1, welches zum Betreiben einer Lichtquelle, insbesondere einer LED vorgesehen ist.

Notlichtgeräte stellen im Falle des Ausfalls der allgemeinen Netzversorgung eine ausreichende Beleuchtung zur Verfügung. Nur dann, wenn im Falle des Ausfalls der Stromversorgung oder anderen Notfällen bestimmte relevante Räumlichkeiten oder Bereiche nach wie vor ausgeleuchtet werden, können Evakuierungs- oder Hilfsmaßnahmen sicher durchgeführt werden. Dementsprechend werden derartige Notlichtgeräte insbesondere zum Ausleuchten von Fluchtwegen und dergleichen eingesetzt.

Notlichtgeräte der gattungsgemäßen Art weisen dementsprechend als zentrales Element eine Energiespeichereinheit, insbesondere eine Batterie bzw. einen Akkumulator auf, welche während eines Normal- bzw. Ladebetriebs durch die allgemeine Netzversorgungsspannung aufgeladen wird. Hierzu ist eine Ladeschaltung vorgesehen, welche eingangsseitig mit der Netzversorgungsspannung verbunden ist und während des Ladebetriebs der Energiespeichereinheit permanent Energie zuführt, welche diese speichert. Erst im Falle des Auftretens eines Notzustands, der von derartigen Geräten durch eine Überwachung der Netzversorgungsspannung üblicherweise selbständig erkannt wird, wird in einen Notlichtbetrieb gewechselt, in dem eine Notlichtquelle aktiviert und betrieben wird, wozu - sofern erforderlich - die von der Energiespeichereinheit zur Verfügung gestellte Energie genutzt wird. Da die Speicherkapazität der Energiespeichereinheit selbstverständlich begrenzt ist, werden vorzugsweise Lichtquellen eingesetzt, welche verhältnismäßig wenig Energie verbrauchen. Dementsprechend werden derartige Notlichtgeräte bevorzugt mit Gasentladungslampen, insbesondere Leuchtstoffröhren ausgestattet. Zunehmend finden allerdings auch Lichtquellen in Form von lichtemittierenden Halbleitern, insbesondere LEDs Verwendung, da auch diese Lichtquellen einen hohen Wirkungsgrad aufweisen und dementsprechend energiesparend eingesetzt werden können.

Die Überwachung der Netzversorgungsspannung, welche also vorgenommen wird, um rechtzeitig einen Notlichtbetrieb veranlassen zu können, erfolgt üblicherweise durch eine Steuereinheit, welche ihr zugeführte Signale auswertet und anhand dieser Signale den Zustand der Netzversorgungsspannung beurteilt. Bei bekannten Schaltungen wird hierzu in naheliegender Weise die Netzversorgungsspannung selbst gemessen. Hieraus ergibt sich dann allerdings das Problem, dass die Sensorik zum Ermitteln des Zustands der Netzversorgungsspannung auf Netzpotential liegt und von den übrigen Schaltungsbereichen des Notlichtgeräts, welche auf dem Spannungsniveau der Energiespeichereinheit oder LED liegen, galvanisch getrennt werden muss. Die hierzu erforderliche Potentialtrennung ist nicht nur teuer, sondern beansprucht darüber hinaus auch verhältnismäßig viel Platz in dem Notlichtgerät.

Aus der US 5,847,550 A ist eine Konverterschaltung zum Laden einer Batterie bekannt, wobei die Batterie beispielsweise als Notstromversorgung für Leuchtmittel (LEDs) verwendet wird. Weiterhin ist es aus dieser Druckschrift bekannt, das Tastverhältnis (duty cycle) eines Schalters des Flyback-Konverters variabel durch eine integrierte Schaltung einzustellen.

Aus der Druckschrift Chen et al. 'A Single-Stage Electronic Ballast with Emergency Lighting Features', Proceedings of the 18th Annual IEEE Applied Power Electronics Conference and Exposition, APEC 2003, Feb. 9-13, 2003; pp. 1185-1190, XP10631662 ist ein Flyback-Konverter in einer Ansteuerschaltung für eine Notbeleuchtung bekannt, wobei der Flyback-Konverter durch einen Schalter gesteuert ist. Dabei ist ein besonderes Ladeverfahren für eine Batterie vorgesehen, das 'reflex charging' genannt wird und bei dem nach einem normalen Ladevorgang ein negativer Entladepuls vor einer Ruhephase angesteuert wird. Der Flyback-Konverter ist nicht für den Ladevorgang, sondern für den Entladevorgang vorgesehen, wobei Energie, die zuvor in die Batterie geladen wurde, mittels des Flyback-Konverters wieder zurück zu einem Kondensator geführt wird. Dies soll Vorteile bezüglich der Batterieeigenschaften haben. Der Flyback-Konverter kann indessen keine Energie von der Netzseite her übertragen, da der steuernde Schalter auf der Sekundärseite liegt.

Aus Chu et al. 'Positive/Negative Pulse Battery Charger with Energy Feedback and Power Factor Correction', 20th Annual IEEE Applied Power Electronics Conference and Exposition (APEC 2005), 2005; pp. 986-990, ist es ebenfalls bekannt, einen Flyback-Konverter für ein Batterieladeverfahren zu verwenden, bei dem mittels des Flyback-Konverters Energie zu einem Boost-Kondensator in einem Entladebetrieb mit negativem Impuls verwendet wird.

Der vorliegenden Erfindung liegt nunmehr die Aufgabe zugrunde, ein verbessertes Konzept für ein Notlichtgerät anzugeben, bei dem die vorstehend beschriebenen Nachteile vermieden sind.

Diese Aufgabe wird durch die Merkmale der unabhängigen Ansprüche gelöst. Vorteilhafte Weiterbildungen der Erfindung sind Gegenstand der Unteransprüche.

Die Netzversorgungsspannung kann indirekt überwacht wird, um gegebenenfalls einen Notlichtbetrieb zu veranlassen. Hierzu werden lediglich Messwerte auf dem Potential der Energiespeichereinheit oder LED erfasst und auf Basis dieser Messwerte mit Hilfe von weiteren Informationen auf den Zustand der Netzversorgungsspannung zurück geschlossen.

Erfindungsgemäß wird dementsprechend ein Gerät, bspw. aber nicht ausschliesslich ein Notlichtgerät zum Betreiben einer Lichtquelle, insbesondere einer LED vorgeschlagen, wobei das Notlichtgerät aufweist:

- eine Energiespeichereinheit,
- eine mit einer Netzversorgungsspannung zu versorgende Ladeschaltung zum Laden der Energiespeichereinheit während eines Ladebetriebs, wobei die Ladeschaltung eine Potentialtrennung aufweist, sowie
- eine während eines Notlichtbetriebs durch die Energiespeichereinheit versorgte Treiberschaltung zum Betreiben der Lichtquelle,

wobei das Gerät ferner eine Steuereinheit aufweist, welche dazu ausgebildet ist, während des Ladebetriebs den Zustand der Netzversorgungsspannung zu überwachen und bei Erkennen eines Notzustands den Notlichtbetrieb zu aktivieren. Hierbei ist erfindungsgemäß vorgesehen, dass die Steuereinheit den Zustand der Netzversorgungsspannung anhand von auf der Ausgangsseite (Sekundärseite der Potentialtrennung) der Ladeschaltung gemessenen Betriebsgrößen des Notlichtgeräts ermittelt.

Durch diese Maßnahmen ist sichergestellt, dass ein sich auf die Spannungsversorgung auswirkender Notzustand nach wie vor zuverlässig erkannt werden und dementsprechend ein Notlichtbetrieb eingeleitet werden kann. Gleichzeitig aber entfällt die erforderliche galvanische Trennung zwischen den Mitteln zur Überwachung der Netzversorgungsspannung und den weiteren Komponenten des Notlichtgeräts, so dass das Gerät insgesamt gesehen kostengünstiger und kompakter realisiert werden kann.

Dabei weist die Ladeschaltung einen steuerbaren Schalter sowie einen Transformator auf, wobei die Ladeschaltung insbesondere durch einen sogenannten Flyback-Konverter gebildet sein kann. Der steuerbare Schalter wird durch die Steuereinheit des Notlichtgeräts angesteuert, wobei hier die Ansteuerung insbesondere über einen Optokoppler erfolgen kann.

Der Zustand der Netzversorgungsspannung wird nunmehr insbesondere unter Berücksichtigung des von der Steuereinheit gewählten Duty-Cycles zur Ansteuerung des Schalters des Flyback-Konverters bzw. der Ladeschaltung ermittelt. Ferner wird hierzu die Sekundärspannung des Flyback-Konverters bzw. bei anderen Schaltnetzteil-Topologien die Ladeleistung für die Energiespeichereinheit berücksichtigt. Diese Ladeleistung kann während des Ladebetriebs, also bei ausgeschalteter Lichtquelle, in einfacher Weise durch die Steuereinheit ermittelt werden kann, da die hierzu zu messenden Werte, nämlich Spannung und Strom der Energiespeicherschaltung sich auf das gleiche Basispotential beziehen, auf dem auch die weiteren Komponenten des Notlichtgeräts liegen. Gleiches gilt auch für die im Falle der Verwendung des Flyback-Konverters zu messende Sekundärspannung. In beiden Fällen kann also die beim Stand der Technik erforderliche galvanische Trennung zwischen den Messeinrichtungen und der Steuereinheit entfallen.

Eine andere vorteilhafte Weiterbildung der vorliegenden Erfindung bezieht sich auf die Maßnahmen zum Betreiben der Lichtquelle, insbesondere der LED während des Notlichtbetriebs. Hierzu ist die Treiberschaltung vorzugsweise als Schaltregler ausgebildet und weist dementsprechend einen weiteren steuerbaren Schalter auf, welcher wiederum durch die Steuereinheit angesteuert wird. Die Ansteuerung der Schalters ist dabei derart, dass die Lichtquelle unabhängig vom Ladezustand der Energiespeichereinheit mit einer konstanten Leistung oder konstantem Strom betrieben werden kann. Diese Maßnahme ist von besonderer Bedeutung, da die Leistung der Energiespeichereinheit selbstverständlich im Laufe der Zeit sinkt, was sich allerdings nicht auf die Lichtintensität des Notlichtgeräts auswirken sollte.

Im Falle der Nutzung einer LED als Lichtquelle wäre es dementsprechend wiederum naheliegend, den Diodenstrom selbst, der die Lichtleistung bestimmt, zu erfassen, um die angestrebte Leistungsregelung zu ermöglichen. Gemäß einer besonders vorteilhaften Weiterbildung der vorliegenden Erfindung ist allerdings vorgesehen, dass die Messung des Diodenstroms entfällt und stattdessen der Strom bzw. die Leistung der Lichtquelle anhand anderer Parameter indirekt gemessen bzw. abgeschätzt wird. Insbesondere wird vorzugsweise lediglich die an der Lichtquelle anliegende Spannung ermittelt und dann der Diodenstrom aus weiteren Informationen abgeleitet, wobei hierbei insbesondere die Verlustleistung der Treiberschaltung berücksichtigt wird. Mittels zuvor bestimmter und in der Steuereinheit hinterlegter Abgleichtabellen kann dann ohne eine direkte Messung des Diodenstroms die Leistung der Lichtquelle bestimmt werden, so dass eine nahezu konstante Lichtleistung durch die Steuereinheit eingestellt werden kann. Die Regelung der Lichtleistung erfolgt hierbei insbesondere durch eine entsprechende Taktung des steuerbaren Schalters der Treiberschaltung, da auf diesem Wege in sehr einfacher und eleganter Weise die Leistung, mit der die Lichtquelle betrieben wird, eingestellt werden kann.

Diese besondere Maßnahme zum Betreiben der Lichtquelle bei einer nahezu konstanten Leistung, wobei auf eine direkte Messung des Stroms verzichtet wird, kann im Übrigen auch unabhängig von dem eingangs beschriebenen erfindungsgemäßen Gedanken der indirekten Überwachung der Netzversorgung genutzt werden.

Nachfolgend soll die Erfindung anhand der beiliegenden Zeichnung näher erläutert werden. Es zeigen:

Fig. 1     schematisch das Schaltbild eines ersten Ausführungsbeispiels eines erfindungsgemäßen Notlichtgeräts;

Fig. 2     ein zweites Ausführungsbeispiel eines Notlichtgeräts;

Fig. 3     eine Grafik zur Ermittlung der Netzversorgungsspannung auf Basis von an der Ausgangsseite der Ladeschaltung gemessenen Betriebsparametern,

Fig. 4 eine weitere Grafik zur Ermittlung der Sekundärleistung der Ladeschaltung, welche zur indirekten Bestimmung der Lichtquellenleistung berücksichtigt wird, und

Fig. 5 eine Illustration zur Impulsansteuerung des Flyback-Konverters.

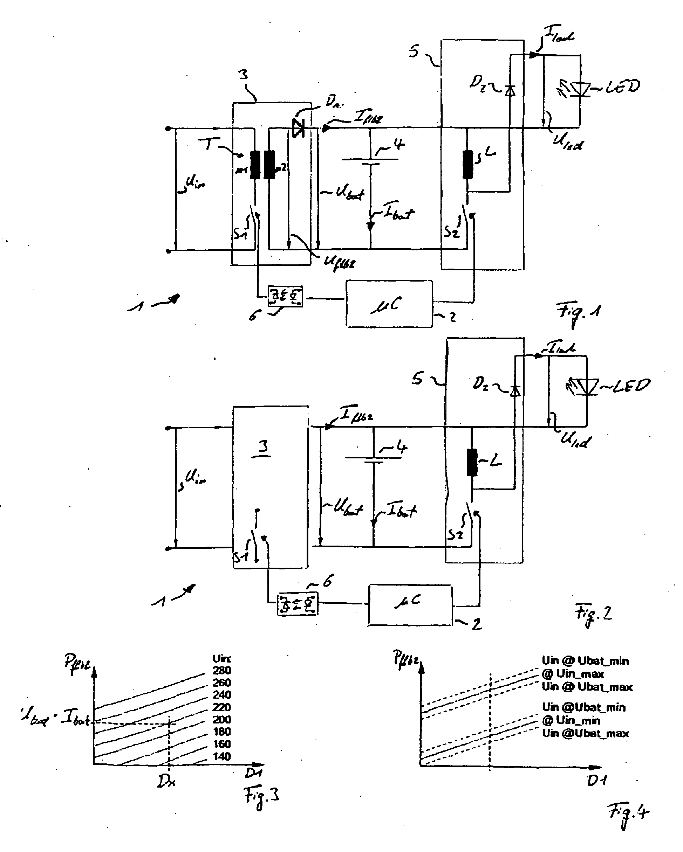

Das in Fig. 1 in vereinfachter Weise dargestellte und allgemein mit dem Bezugszeichen 1 versehene erfindungsgemäße Notlichtgerät ist im dargestellten Ausführungsbeispiel zum Betreiben einer LED als Notlichtquelle vorgesehen. Das Notlichtgerät 1 ist eingangsseitig an ein Stromversorgungsnetz angeschlossen, welches eine Netzversorgungsspannung $U_{in}$ zur Verfügung stellt, und weist als wesentliche Komponenten eine Steuereinheit 2, eine Ladeschaltung 3, eine Energiespeichereinheit 4 in Form einer Batterie bzw. eines Akkumulators sowie eine Treiberschaltung 5 auf.

Die Ladeschaltung 3 ist im dargestellten ersten Ausführungsbeispiel durch einen sog. Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalter S1 die von der Netzversorgungsspannung $U_{in}$ zur Verfügung gestellte Energie auf die Sekundärseite des Flyback-Konverters 3 übertragen und zum Aufladen der Energiespeichereinheit 4 genutzt werden. Die Energieübertragung findet dabei im geöffneten Zustand des Schalters S1 statt, wobei hierzu auf der Ausgangsseite des Flyback-Konverters 3 ferner eine Diode $D_1$ vorgesehen ist. Derartige Flyback-Schaltungen finden aufgrund ihres einfachen Aufbaus und ihrer zuverlässigen Funktion in derartigen Notlichtgeräten vielfach Verwendung.

Die Ansteuerung des steuerbaren Schalters S1 erfolgt durch die Steuereinheit 2 des Notlichtgeräts, wobei die Ansteuerung insbesondere galvanisch getrennt über einen Optokoppler 6 erfolgt. Die Steuereinheit 2 steuert hierbei den Schalter S1 alternierend an, wobei sich der sog. Duty-Cycle D1 für den Schaltbetrieb des Schalters S1 wie folgt berechnet:

$$D1 = t_{on1}/(T - t_{on1})$$

$t_{on1}$ entspricht hierbei der Einschaltzeit des Schalters, während T die Gesamtdauer eines vollständigen Schaltzyklus für den Schalter S1 bezeichnet.

Denkbar ist auch, dass es sich bei der Ansteuerung von S1 um einen 'Freischwinger' handelt und über den Duty-cycle vom Optokoppler 6 die Eigenfrequenz des 'Freischwinger' beeinflusst wird.

Während eines Ladebetriebs des Notlichtgeräts 1 ist üblicherweise ausschließlich die Ladeschaltung 3 aktiv, um die Batterie 4 dauerhaft aufzuladen. Erst für den Fall, dass ein Notzustand vorliegt, der insbesondere durch Abweichungen in der Netzversorgungsspannung $U_{in}$ von vorbestimmten Soll-Werten gekennzeichnet ist, wird ein Notlichtbetrieb eingeleitet, in dem die Treiberschaltung 5 dazu genutzt wird, die LED anzusteuern. Die als Schaltregler ausgebildete Treiberschaltung 5 weist hierzu einen weiteren steuerbaren Schalter S2, eine Induktivität L sowie eine Diode $D_2$ auf. Durch alternierendes Ansteuern des Schalters S2 durch die Steuereinheit 2 wird auf diese Weise der LED ein Strom zur Verfügung gestellt, über welchen diese betrieben wird. Das Tastverhältnis, mit dem der Schalter S2 durch die Steuereinheit 2 angesteuert wird, kann dabei variiert werden, um die Höhe des der LED zugeführten Stroms und damit die Leistung, bei welcher die LED betrieben wird, einzustellen. Auf diese Weise kann in sehr eleganter Weise sichergestellt werden, dass auch bei schwankender Batterieleistung die LED trotz allem mit gleichbleibender Helligkeit betrieben wird.

Eine erste wesentliche Funktion des Notlichtgeräts 1 besteht also darin, durch Beurteilung der Netzversorgungsspannung $U_{in}$ zu erkennen, ob ein Notzustand vorliegt, um ggf. einen Notlichtbetrieb zu veranlassen. Bislang war es bekannt, hierzu unmittelbar den Wert der Eingangsspannung $U_{in}$ für die Ladeschaltung 3 zu bestimmen, was allerdings aus den zuvor genannten Gründen mit Nachteilen verbunden ist.

Dabei kann bei der gezeigten Schaltung auf eine direkte Messung der Netzversorgungsspannung $U_{in}$ verzichtet werden. Stattdessen ist vorgesehen, diese auf indirektem Wege zu ermitteln. Insbesondere ist vorgesehen, das lediglich Größen von Betriebsparametern des Notlichtgeräts 1 auf der Sekundärseite der Potentialtrennung der Ladeschaltung 3 gemessen werden.

Bei dem ersten Ausführungsbeispiel gemäß Fig. 1 wird hierzu die auf der Sekundärseite des Sperrwandlers bzw. Flyback-Konverters 3 anliegende Spannung $U_{f1b2}$ gemessen, wozu insbesondere keine galvanische Trennung erforderlich ist, da diese Größe auf dem gleichen Bezugspotential liegt wie die Steuereinheit 2, welchen den Messwert auswertet. Ist nun die Höhe dieser Sekundärspannung $U_{f1b2}$ bekannt, so kann ausgehend hiervon auf die Höhe der Eingangsspannung $U_{in}$ zurückgeschlossen werden. Bei eingeschaltetem Schalter S1 des Flyback-Konverters 3 besteht nämlich ein Zusammenhang zwischen Eingangsspannung $U_{in}$ und Sekundärspannung $U_{f1b2}$, der insbesondere von dem Wicklungsverhältnis zwischen den beiden Wicklungen n1 und n2 des Transformators T sowie von dem Duty-Cycle des Schalters D1 abhängig ist. Dieser Zusammenhang zwischen der einfach zu messenden Sekundärspannung $U_{f1b2}$ und der zu überwachenden Eingangsspannung $U_{in}$ ist nunmehr in Form einer Wertetabelle in der Steuereinheit 2 hinterlegt, so dass diese nach Messung der Sekundärspannung $U_{f1b2}$ in einfacher Weise die Höhe der Eingangsspannung $U_{in}$ bestimmen kann, ohne diese direkt messen zu müssen. Stellt nun die Steuereinheit 2 fest, dass die ermittelte Eingangsspannung $U_{in}$ außerhalb bestimmter Sollwert-Bereiche liegt, so deutet dies auf einen Notzustand hin, was die Steuereinheit 2 wiederum dazu veranlassen wird, einen Notbetrieb einzuleiten.

Die beschriebene Lösung ermöglicht also eine sehr einfache aber effektive Überwachung des Zustands der allgemeinen Stromversorgung. Ferner besteht ein besonderer Vorteil des in Fig. 1 dargestellten Ausführungsbeispiels darin, dass die Höhe der Eingangsspannung $U_{in}$ unabhängig davon bestimmt werden kann, ob die Notlicht-LED eingeschaltet ist oder nicht. Die Diode $D_1$ bewirkt nämlich durch ihre Sperrwirkung eine Trennung zwischen Sekundärspannung $U_{f1b2}$ und Batteriespannung $U_{Bat}$, so dass sich die Tätigkeit der Treiberschaltung 3 nicht auf den vorbeschriebenen Vorgang der Bestimmung der Eingangsspannung $U_{in}$ auswirkt.

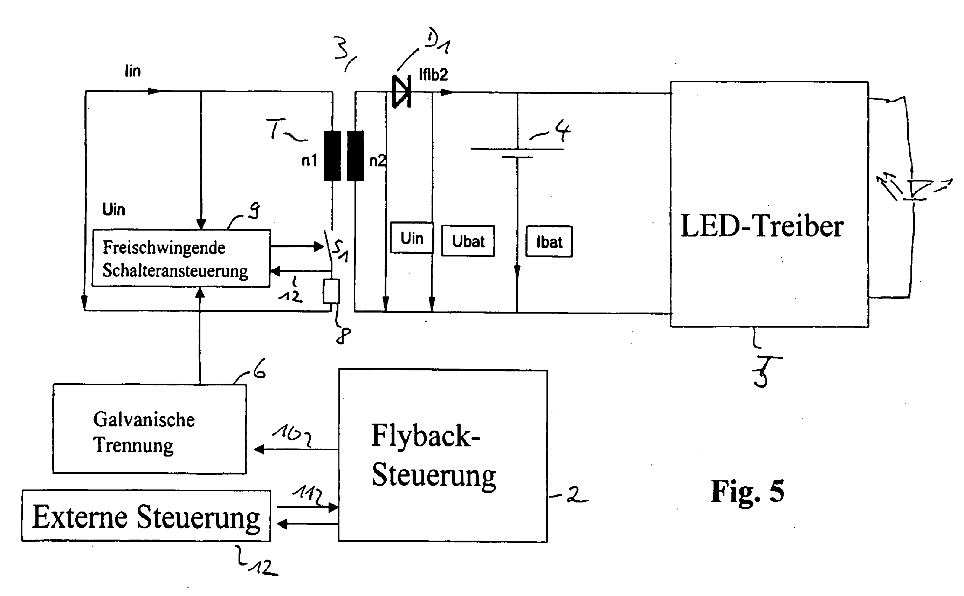

Bezug nehmend auf Figur 5 soll eine besondere Betriebsweise des Flyback-Konverters 3 erläutert werden.

Bekanntlich ist bei Notlichtgeräten aufgrund gesetzlicher Vorschriften vorgesehen, dass die Geräte in vorgegebenen Abständen oder von Aussen vorgegeben einen sogenannten Selbsttest ausführen. Bei diesem Selbsttest muß also überprüft werden, ob bei Simulation eines Ausfalls der Netzeingangsspannung das Notlichtgerät ordnungsgemäß die angeschlossenen Leuchtmittel ansteuert. Dabei ist beispielsweise auch vorgeschrieben, dass während des Selbsttests die Leistung von der Netzspannungsversorgung beispielsweise 5% nicht überschreiten darf und vielmehr der grösste Anteil der Leistungsversorgung des Notlichts der Batterie entnommen werden muss.

Bei der in Figuren 1 und 5 gezeigten Ausführungsform besteht nunmehr das Problem, dass bei ‚abgeschalteter Netzspannungsversorgung', d.h. bei nicht operativem Flyback-Konverter 3 die Netzspannung nicht weiter überwacht werden kann. Somit könnte bei abgeschaltetem Flyback-Konverter 3 zwar der Selbsttest vorschriftsgemäß ausgeführt werden, ein zeitgleich erfolgender echter Notfall, d.h. ein Ausfall oder übermäßiges Absinken der Netzspannung aber nicht erkannt werden. Solange der Flyback-Konverter 3 nicht betrieben wird (d.h. der Schalter nicht getaktet wird), ist die in Figuren 1 und 5 dargestellte Schaltung mit sekundärseitiger und somit indirekter Netzspannungsdetektion sozusagen blind.

Daher ist erfindungsgemäß vorgesehen, dass ausgehend von einer Flyback-Steuereinheit 2 bei Vorliegen vorbestimmter Kriterien der Flyback-Konverter 3 in einen impulsartigen Betrieb angesteuert werden kann. Unter impulsartigem Betrieb ist dabei zu verstehen, dass der Schalter S1 dazu veranlasst wird, eine vorbestimmte Anzahl von hochfrequenten Schaltvorgängen auszuführen, bevor er dann eine im Vergleich zur Schaltperiode längere Ruhestellung einnimmt. Es wechseln also Perioden mit hochfrequenter Taktung des Schalters S1 des Flyback-Konverters 3 mit Perioden ab, in den der Schalter S1 nicht getaktet ist.

Während der Zeitdauer der hochfrequenten Taktung kann also die Netzspannung überwacht werden. Die Zeitdauer der hochfrequenten Taktung ist im Verhältnis zu der Ruheperiode des Schalters so kurz gewählt, dass im zeitlichen Mittel nicht mehr als die im Selbsttest zulässige Leistung aus dem Netz entnommen wird. Das Verhältnis Netzleistung/Batterieleistung wird also über den Duty Cycle der Impulsansteuerung eingestellt.

Ein derartiger Impulsbetrieb kann beispielsweise durch die Flyback-Steuerung 2 angesteuert werden, wenn über eine beispielsweise einen bidirektionalen Bus 11 angeschlossene externe Steuereinheit 12 das Ausführen eines Selbsttests anweist. In diesem Fall steuert also dann die Flyback-Steuerung 2 mittels eines Impulsbetrieb-Aktivierungssignals 10 und mittels der galvanischen Trenneinheit 6 die Ansteuerung 9 für den Schalter S1 an. Dabei kann es sich beispielsweise um eine freischwingende Schalteransteuerung 9 handeln. In Serie zum Schalter S1 kann ein Meßwiderstand (Shunt) 8 geschaltet sein, so dass der Schalterstrom mittels der an diesem Shunt 8 abfallenden Spannung 12 erfasst und der freischwingenden Schalteransteuerung 9 zurückgeführt werden kann.

Der Selbsttestbetrieb stellt nur ein Beispiel für einen Zustand dar, der von der Flyback-Steuerung erfasst wird, um dann den Impulsbetrieb für den Flyback-Konverter 3 auszulösen. Ein weiterer Zustand, der die Flyback-Steuerung 2 zu einer Ansteuerung des Impulsbetriebs für den Flyback-Konverter 3 veranlassen kann, ist beispielsweise, wenn durch die indirekte Erfassung die Flyback-Steuerung 2 erfasst, dass die Netzeingangsspannung zwar nicht vollkommen ausgefallen ist, aber unter einen vorgegebenen Schwellenwert abgesunken ist. Wenn bei dieser abgesunkenen, aber noch vorhandenen Netzeingangsspannung $U_{in}$ der Impulsbetrieb des Flyback-Konverters 3 angeschaltet wird, stellt dies sozusagen einen assistierenden Netzspannungsbetrieb zur Batteriespannungsversorgung dar, der die Batterielebensdauer verlängert.

Ein zweites, etwas allgemeineres Ausführungsbeispiel eines erfindungsgemäßen Notlichtgeräts ist in Fig. 2 dargestellt. Dieses entspricht in seinem Aufbau im Wesentlichen dem in Fig. 1 gezeigten Notlichtgerät 1, allerdings ist nunmehr die Ladeschaltung 3 nicht durch einen Flyback-Konverter sondern generell durch eine Schaltungsanordnung gebildet, welche eine Potentialtrennung sowie einen wiederum durch die Steuereinheit 2 angesteuerten Schalter S1 aufweist.

Bei dieser allgemeineren Ausführungsform besteht nicht zwangläufig ein bekannter Zusammenhang zwischen der Eingangsspannung $U_{in}$ und der Spannung auf der Ausgangsseite der Ladeschaltung 3. Dennoch kann auch hier die Höhe der Eingangsspannung $U_{in}$ auf indirektem Wege bestimmt werden, wobei hierzu nunmehr allerdings andere Betriebsgrößen gemessen werden.

Es handelt sich hierbei einerseits um die Batteriespannung $U_{bat}$ sowie andererseits um den Batteriestrom $I_{bat}$. Beide Größen können wiederum verhältnismäßig einfach, also ohne galvanische Trennung bestimmt werden, da sie wiederum ebenso wie die Steuereinheit 2, welche diese Messgrößen auswertet, auf dem gleichen Bezugspotential liegen.

Auf Basis dieser beiden Messgrößen $U_{bat}$ und $I_{bat}$ sowie des bekannten Duty-Cycles D1 für den Schalter S1 der Ladeschaltung 3 kann dann die Eingangsspannung $U_{in}$ bestimmt werden, da diese mit den drei bekannten Größen in einer Beziehung steht. Dies verdeutlicht die Grafik von Fig. 3, welche unterschiedliche Kennlinien der Sekundärleistung $P_{f1b2}$ der Ladeschaltung 3 in Abhängigkeit von dem Duty-Cycle D1 für den Schalter S1 zeigt. Diese Kennlinien werden beispielsweise bei der Herstellung des Notlichtgeräts ermittelt und wiederum in Form einer Tabelle in der Steuereinheit 2 hinterlegt. Es ist erkennbar, dass diese Kennlinien insbesondere auch von der Eingangsspannung $U_{in}$ abhängig sind. Sind nunmehr also der Duty-Cycle D1 sowie die Sekundärleistung $P_{f1b2}$ der Ladeschaltung 3 bekannt, so kann ebenso wie bei dem Beispiel von Fig. 1 auf die Höhe der Eingangsspannung $U_{in}$ zurück geschlossen werden.

Im dargestellten Beispiel von Fig. 3 wird also ermittelt, mit welcher Kennlinie die bekannte Kombination aus Duty-Cycle D1 und Sekundärleistung $P_{f1b2}$ der Ladeschaltung 3, welche bei deaktivierter Treiberschaltung 5 dem Produkt aus Batteriespannung $U_{bat}$ und Batteriestrom $I_{bat}$ entspricht, übereinstimmt. Bei den dargestellten Messwerten beispielsweise liegt dieser Wert auf der Kennlinie für eine Eingangsspannung $U_{in}$ von 220 Volt, was einem ordnungsgemäßen Zustand der allgemeinen Netzversorgung entspricht. Würde allerdings der ermittelte Wert auf einer Kennlinie liegen, die beispielsweise einer Eingangsspannung $U_{in}$ von 140 Volt oder 280 Volt entspricht, so würde dies die Steuereinheit 2 wiederum dahingehend interpretieren, dass ein Fehler in der Netzversorgung vorliegt und dementsprechend einen Notzustand einleiten.

In beiden gezeigten Ausführungsbeispielen kann also zuverlässig und ohne das Erfordernis einer direkten Messung der Eingangsspannung $U_{in}$ festgestellt werden, ob die Netzversorgung in Ordnung ist oder nicht. Eine Einschränkung bei dem Beispiel von Fig. 2 besteht allerdings darin, dass die beschriebene Bestimmung der Eingangsspannung $U_{in}$ nur im ausgeschalteten Zustand der Treiberschaltung 5 möglich ist. Bei dem Beispiel von Fig. 1 hingegen besteht diese Einschränkung - wie bereits erwähnt - nicht. Grundsätzlich allerdings wird die Steuereinheit 2 im Falle des Erkennens eines Fehlers eine Aktivierung der Treiberschaltung 5 und dementsprechend ein Einschalten der LED veranlassen.

Nach Aktivieren der Treiberschaltung 5 kann dann in der zuvor beschriebenen Weise der Schalter S2 hochfrequent angesteuert werden, um die LED mit einer gewünschten Leistung zu betreiben. Um in diesem Fall sicherzustellen, dass die Leistung der LED konstant ist, wäre es erforderlich, sowohl die LED-Spannung $U_{led}$ als auch den LED-Strom $I_{led}$ zu kennen, um eine Regelung zu ermöglichen. Gemäß einer besonderes vorteilhaften Weiterbildung wird allerdings lediglich die LED-Spannung $U_{led}$ gemessen und der Strom $I_{led}$ bzw. die sich damit ergebende Leistung $P_{led}$ durch die Steuereinheit 2 indirekt ermittelt, was nachfolgend näher erläutert werden soll.

Um den Diodenstrom $I_{led}$ indirekt bestimmen zu können, werden nunmehr zumindest die Größen Batteriespannung $U_{bat}$, Batteriestrom $I_{bat}$ und - Falle des Beispiels von Fig. 1 - Sekundärspannung $U_{f1b2}$ sowie zusätzlich die LED-Spannung $U_{led}$ gemessen. Hieraus können dann die weiteren Informationen, welche zur Regelung des LED-Stroms $I_{led}$ benötigt werden, berechnet werden, wozu allerdings noch weitere Informationen erforderlich sind, welche nicht durch Istwert-Messungen erfasst werden, sondern als Wertetabellen in der Steuereinheit 2 hinterlegt sind.

Die erste Wertetabelle ist die bereits oben erwähnte Information hinsichtlich des Zusammenhangs zwischen Duty-Cycle D1, Sekundärspannung $U_{f1b2}$ und Eingangsspannung $U_{in}$ bei dem Beispiels von Fig. 1 bzw. zwischen Duty-Cycle D1, Batteriespannung $U_{bat}$, Batteriestrom $I_{bat}$ und Eingangsspannung $U_{in}$ bei dem allgemeineren Beispiel von Fig. 2. Ferner muss zum Ermitteln des Diodenstroms auch die Verlustleistung $P_{lost}$ der Treiberschaltung 5 bekannt sein, welche von der Differenz zwischen der gemessenen LED-Spannung $U_{led}$ und der ebenfalls gemessenen Batteriespannung $U_{bat}$ abhängig ist, so dass gilt:

$$P_{lost} = f\left(U_{led} - U_{bat}\right)$$

Die dritte benötigte Information schließlich ist die im Falle einer aktivierten Treiberschaltung vorliegende Sekundärleistung $P_{f1b2}$ der Ladeschaltung 3, welche eine Funktion des Duty-Cycles D1, der Eingangsspannung $U_{in}$ sowie der Batteriespannung $U_{bat}$ ist. Der Zusammenhang zwischen diesen Größen ist in Fig. 4 dargestellt, wobei erkennbar ist, dass die Sekundärleistung $P_{f1b2}$ der Ladeschaltung 3 primär von der Eingangsspannung $U_{in}$ und dem Duty-Cycle D1 für den Schalter S1 abhängig ist, darüber hinaus allerdings auch noch auf Grund der Batteriespannung $U_{bat}$ variieren kann.

Ist nun aufgrund der zuvor beschriebenen Maßnahmen die Eingangsspannung $U_{in}$ (ggf. bei dem Beispiel von Fig. 2 zunächst bei abgeschalteter Treiberschaltung 5) ermittelt worden, so kann anhand des Zusammenhangs in Fig. 4 auch bei aktivierter Treiberschaltung 5 die Sekundärleistung $P_{f1b2}$ der Ladeschaltung 3 ermittelt werden. Bekannt sind dann also die gemessenen Größen Batteriespannung $U_{bat}$, Batteriestrom $I_{bat}$, ggf. Sekundärspannung $U_{f1b2}$ und LED-Spannung $U_{led}$, der durch die Steuereinheit vorgegebene Duty-Cycle D1 für den Schalter S1, sowie die anhand der hinterlegten Wertetabellen bestimmten weiteren Größen Eingangsspannung $U_{in}$, Sekundärleistung $P_{f1b2}$. der Ladeschaltung 3 sowie Verlustleistung $P_{lost}$ der Treiberschaltung 5.

Die Kenntnis dieser Größen wiederum ermöglicht gemäß dem folgenden Zusammenhang zunächst die Bestimmung des Stroms $I_{f1b2}$ auf der Sekundärseite der Ladeschaltung 3:

$$I_{f1b2} = P_{f1b2}/U_{bat}$$

Schließlich können auch der LED-Strom $I_{led}$ und die LED-Leistung $P_{led}$ nach folgenden Gleichungen berechnet werden:

$$I_{led} = \left(P_{f1b2} - U_{bat} \cdot I_{bat} - P_{lost}\right)/U_{led}$$

$$P_{led} = P_{f1b2} - U_{bat} \cdot I_{bat} - P_{lost}$$

Beide Gleichungen gelten für den Fall, dass die Ladeschaltung 3 nach wie vor aktiv ist, also zumindest noch eine gewisse Stromversorgung zur Verfügung steht. Dies kann beispielsweise der Fall sein, wenn ein Notlichtbetrieb anderweitig.veranlasst wurde. Für den Fall hingegen, dass die Stromversorgung vollständig ausfällt und der Notlichtbetrieb ausschließlich durch die Batterie aufrechterhalten wird, gelten die vereinfachten Gleichungen:

$$I_{led} = \left(U_{bat} \cdot I_{bat} - P_{lost}\right)/U_{led}$$

$$P_{led} = U_{bat} \cdot I_{bat} - P_{lost}$$

Letztendlich können also der aktuelle Ist-Wert des LED-Stroms $I_{led}$ sowie die aktuelle Leistung $P_{led}$ auf indirektem Wege ermittelt und zur Regelung genutzt werden. Die entsprechenden Berechnungen werden durch die Steuereinheit 2 durchgeführt.

Der Vorteil dieser indirekten Bestimmungen der zur Regelung erforderlichen Istwerte besteht darin, dass auf eine Messung eines zusätzlichen Betriebsparameters des Notlichtgeräts verzichtet werden kann, was wiederum zu einer weiteren Vereinfachung des Geräts insgesamt führt. Da hierbei ohnehin zum Teil auf bereits zur Bestimmung der Eingangsspannung ermittelte bzw. gemessene Parameter zurückgegriffen werden kann, stellt diese indirekte Bestimmung des LED-Stroms also eine besonders vorteilhafte Weiterbildung des eingangs beschriebenen Gedankens der indirekten Bestimmung der Eingangspannung dar. Allerdings könnte eine entsprechende indirekte Strom- und Leistungsbestimmung für die Lichtquelle auch bei anderen Geräten zum Einsatz kommen, bei denen der erste erfindungsgemäße Gedanke nicht verwirklicht ist. Beispielsweise ist diese Vorgehensweise u.a. bei Notlichtgeräten sinnvoll, bei denen ein Notzustand alternativ oder ergänzend zur Überwachung der Stromversorgung auch anderweitig signalisiert werden kann. So könnte bei dem erfindungsgemäßen Notlichtgerät beispielsweise auch über einen separaten Steuereingang ein Notsignal z.B. von einem Feuermelder oder einer anderen Steuereinrichtung übermittelt werden, um durch ein externes Signal einen Notlichtbetrieb zu veranlassen.

Eine andere Weiterbildung schließlich betrifft die zuvor erwähnten und in der Steuereinheit hinterlegten Wertetabellen, welche zur indirekten Bestimmung der Eingangsspannung und des Dioden-Stroms erforderlich sind. Wie bereits erwähnt wurde, können diese Wertetabellen bereits bei der Herstellung des Notlichtgeräts in der Steuereinheit gespeichert werden. Alternativ oder ergänzend hierzu wäre es allerdings auch denkbar, diese Informationen nachträglich einzuschreiben bzw. zu einem späteren Zeitpunkt zu aktualisieren. Hierfür könnte z.B. ein in dem Notlichtgerät vorgesehenes digitales Interface genutzt werden, welches üblicherweise zur Fehlersignalisierung und Überwachung genutzt wird. Mit Hilfe dieses Interfaces könnten nunmehr unter Nutzung eines erweiterten Befehlssatzes neue Wertetabellen in die Steuereinheit eingeschrieben werden. Dieses nachträgliche Einschreiben neuer Informationen ist beispielsweise sinnvoll, um neue Soll- bzw. Tolleranzwerte für die Eingangsspannung vorzugeben oder auch die Informationen zur Ermittlung der nicht direkt gemessenen Größen an die angeschlossene Batterie anzupassen. Hierdurch kann also das Notlichtgerät hinsichtlich seines Verhaltens jederzeit an neue Umstände angepasst werden.

Insgesamt gesehen wird somit durch die vorliegende Erfindung ein neuartiges Notlichtgerät bereitgestellt, welches sich durch seinen einfachen und kostengünstig zu realisierenden Aufbau auszeichnet und trotz allem in zuverlässiger Weise die Feststellung eines Notfalles durch Überwachung der allgemeinen Netzversorgung ermöglicht. Darüber hinaus ist durch die vorteilhafte Regelung des Diodenstroms eine konstante Lichtabgabe über die Dauer eines Notbetriebs hinweg sichergestellt.

**Patentansprüche**

1. Gerät, insbesondere Notlichtgerät (1) zum Betreiben einer Lichtquelle, insbesondere einer LED, wobei das Gerät (1) aufweist:

   • eine Energiespeichereinheit (4),

• eine mit Netzversorgungsspannung ($U_{in}$) zu versorgende Ladeschaltung (3) zum Laden der Energiespeichereinheit (4) während eines Ladebetriebs, wobei die Ladeschaltung (3) einen Flyback-Konverter aufweist, sowie
• eine während eines Notlichtbetriebs durch die Energiespeichereinheit (4) versorgte Treiberschaltung (5) zum Betreiben der Lichtquelle,

wobei eine Steuereinheit. (2) vorgesehen ist, die den Flyback-Konverter selektiv in einen Impulsbetrieb versetzt, **dadurch gekennzeichnet,** **dass** in dem Impulsbetrieb ein Schalter (S1) des Flyback-Konverters eine vorbestimmte Anzahl von hochfrequenten Schaltvorgängen ausführt, bevor er dann eine im Vergleich zur Schaltperiode längere Ruhestellung einnimmt, so dass sich in diesem Impulsbetrieb Perioden mit hochfrequenter Taktung des Schalters des Flyback-Konverters mit Perioden abwechseln, in denen der Schalter nicht getaktet ist.

2. Gerät nach Anspruch 1,
bei dem der Flyback-Konverter mittels eines Transformators (T) eine Potentialtrennung aufweist.

3. Gerät nach Anspruch 1,
wobei die Steuereinheit (2) den Impulsbetrieb des Flyback-Konverters während einer Selbsttestphase des Geräts ansteuert.

4. Gerät nach Anspruch 1 oder 3,
wobei die Steuereinheit (2) den Impulsbetrieb des Flyback-Konverters des Geräts ansteuert, wenn die Netzversorgungsspannung einen vorgegebenen Schwellenwert unterschreitet.

5. Gerät nach einem der vorhergehenden Ansprüche,
wobei die Steuereinheit (2) dazu ausgebildet ist, den Zustand der Netzversorgungsspannung (Uin) während des Ladebetriebs zu überwachen und bei Erkennen eines Notzustands den Notlichtbetrieb zu aktivieren,

6. Gerät nach Anspruch 5,
wobei die Steuereinheit (2) den Zustand der Netzversorgungsspannung (Uin) anhand von auf der Ausgangsseite der Ladeschaltung (3) gemessenen Betriebsgrößen des Geräts (1) ermittelt.

7. Gerät nach einem der vorhergehenden Ansprüche,
**dadurch gekennzeichnet,**
**dass** die Ansteuerung des Schalters (S1) des Flyback-Konverters über einen Opto-Koppler (6) erfolgt.

8. Gerät nach Anspruch 7,
**dadurch gekennzeichnet,**
**dass** die Steuereinheit (2) den Zustand der Netzversorgungsspannung (Uin) unter Berücksichtigung eines Duty-Cycles (D1) zur Ansteuerung des Schalters (S1) sowie der gemessenen Sekundärspannung (Uflb2) des Flyback-Konverters ermittelt.

9. Gerät nach einem der Ansprüche 7 oder 8,
**dadurch gekennzeichnet,**
**dass** die Steuereinheit (2) den Zustand der Netzversorgungsspannung (Uin) unter Berücksichtigung eines Duty-Cycles (D1) zur Ansteuerung des Schalters (S1) sowie der Ladeleistung (Pflb2) für die Energiespeichereinheit (4) ermittelt.

10. Gerät nach Anspruch 9,
**dadurch gekennzeichnet,**
**dass** die Steuereinheit (2) die Ladeleistung (Pflb2) für die Energiespeichereinheit (4) durch Messung des durch die Energiespeichereinheit (4) fließenden Stroms (Ibat) sowie der daran anliegenden Spannung (Ubat) bestimmt.

11. Gerät nach einem der Ansprüche 7 bis 10,
**dadurch gekennzeichnet,**
**dass** die Steuereinheit (2) die Netzversorgungsspannung (Uin) durch Vergleich bekannter bzw. gemessener Betriebsgrößen mit einer in der Steuereinheit (2) hinterlegten Wertetabelle bestimmt.

12. Gerät nach einem der vorherigen Ansprüche,
**dadurch gekennzeichnet,**
**dass** die Treiberschaltung (5) als Schaltregler ausgebildet ist und einen durch die Steuereinheit (2) angesteuerten steuerbaren Schalter (S2) aufweist.

13. Gerät nach Anspruch 12,
**dadurch gekennzeichnet,**
**dass** die Steuereinheit (2) die Treiberschaltung (5) derart ansteuert, dass die Lichtquelle unabhängig vom Ladezustand der Energiespeichereinheit (4) mit einer konstanten Leistung (Pled) oder konstantem Strom (Iled) betrieben wird.

14. Verfahren zum Betrieb eines Geräts zum Betreiben einer Lichtquelle,
wobei das Gerät (1) aufweist:

• eine Batterie (4),
• eine mit Netzversorgungsspannung (Uin) gespeiste Ladeschaltung (3) mit einem Flyback-Konverter (3), sowie
• eine während eines Notlichtbetriebs durch die Batterie (4) versorgte Treiberschaltung (5) zum Betreiben der Lichtquelle,

wobei der Flyback-Konverter (3) selektiv in einen Impulsbetrieb versetzt wird, **dadurch gekennzeichnet,**
**dass** in dem Impulsbetrieb eine vorbestimmte Anzahl von hochfrequenten Schaltvorgängen durch einen Schalter (S1) des Flyback-Konverters ausgeführt wird, bevor der Schalter dann eine im Vergleich zur Schaltperiode längere Ruhestellung einnimmt, sodass in diesem Impulsbetrieb sich Perioden mit hochfrequenter Taktung des Schalters (S1) des Flyback-Konverters (3) mit Perioden abwechseln, in denen der Schalter (S1) nicht getaktet ist.

15. Verfahren nach Anspruch 14,
bei der der Flyback-Konverter eine Potentialtrennung zwischen der Netzversorgungsspannung (Uin) und der Batterie(4) ausführt.

**Claims**

1. A device, in particular an emergency-light device (1), for operating a light source, in particular an LED, the device (1) exhibiting:

    • an energy storage unit (4),
    • a charging circuit (3), to be supplied with mains supply voltage ($U_{in}$), for charging the energy storage unit (4) during a charging operation, the charging circuit (3) exhibiting a flyback converter, and also
    • a driver circuit (5), supplied during an emergency-light operation by the energy storage unit (4), for operating the light source, wherein a control unit (2) is provided that sets the flyback converter selectively to a pulsed operation, **characterised in that**

    in the pulsed operation a switch (S1) of the flyback converter performs a predetermined number of high-frequency switching operations before it then assumes a rest position for a relatively long time in comparison with the switching period so that in this pulsed operation periods with high-frequency clocking of the switch of the flyback converter alternate with periods in which the switch is not clocked.

2. A device according to Claim 1,
wherein the flyback converter exhibits a potential separation by means of a transformer (T).

3. A device according to Claim 1,
wherein the control unit (2) triggers the pulsed operation of the flyback converter during a self-test phase of the device.

4. A device according to Claim 1 or 3,
wherein the control unit (2) triggers the pulsed operation of the flyback converter of the device if the mains supply voltage falls below a predetermined threshold value.

5. A device according to one of the preceding claims, wherein the control unit (2) is designed for monitoring the state of the mains supply voltage ($U_{in}$) during the charging operation and for activating the emergency-light operation when an emergency condition is detected.

6. A device according to Claim 5,
wherein the control unit (2) ascertains the state of the mains supply voltage ($U_{in}$) on the basis of operating variables of the device (1) that are measured on the output side of the charging circuit (3).

7. A device according to one of the preceding claims, **characterised in that**
the triggering of the switch (S1) of the flyback converter is undertaken via an optocoupler (6).

8. A device according to Claim 7,
**characterised in that**
the control unit (2) ascertains the state of the mains supply voltage ($U_{in}$) by taking account of a duty cycle (D1) for triggering the switch (S1) and also by taking account of the measured secondary voltage ($U_{f1b2}$) of the flyback converter.

9. A device according to one of Claims 7 or 8, **characterised in that**
the control unit (2) ascertains the state of the mains supply voltage ($U_{in}$) by taking account of a duty cycle (D1) for triggering the switch (S1) and also by taking account of the charging power ($P_{f1b2}$) for the energy storage unit (4).

10. A device according to Claim 9,
**characterised in that**
the control unit (2) determines the charging power ($P_{f1b2}$) for the energy storage unit (4) by measurement of the current ($I_{bat}$) flowing through the energy storage unit (4) and also by measurement of the voltage ($U_{bat}$) applied thereto.

11. A device according to one of Claims 7 to 10, **characterised in that**
the control unit (2) determines the mains supply voltage ($U_{in}$) by comparison of known or measured operating variables with a table of values saved in the control unit (2).

12. A device according to one of the previous claims, **characterised in that**
the driver circuit (5) takes the form of a switching regulator and exhibits a controllable switch (S2) triggered by the control unit (2).

13. A device according to Claim 12,
**characterised in that**
the control unit (2) triggers the driver circuit (5) in such a manner that the light source is operated with a constant power ($P_{led}$) or with constant current ($I_{led}$) irrespective of the state of charge of the energy storage unit (4).

14. A process for operating a device for operating a light source,
the device (1) exhibiting:

   • a battery (4),
   • a charging circuit (3), fed with mains supply voltage ($U_{in}$), with a flyback converter (3), and also
   • a driver circuit (5), supplied by the battery (4) during an emergency-light operation, for operating the light source,

   wherein the flyback converter (3) is selectively set to a pulsed operation,
   **characterised in that**
   in the pulsed operation a predetermined number of high-frequency switching operations are performed by a switch (S1) of the flyback converter before the switch then assumes a rest position for a relatively long time in comparison with the switching period so that in this pulsed operation periods with high-frequency clocking of the switch (S1) of the flyback converter (3) alternate with periods in which the switch (S1) is not clocked.

15. A process according to Claim 14,
wherein the flyback converter implements a potential separation between the mains supply voltage ($U_{in}$) and the battery (4).

**Revendications**

1. Appareil, en particulier appareil d'éclairage de secours (1), pour faire fonctionner une source de lumière, en particulier une LED, l'appareil (1) présentant :

   - une unité de stockage d'énergie (4),
   - un circuit de chargement (3), à alimenter avec une tension d'alimentation de réseau (Uin), pour charger l'unité de stockage d'énergie (4) pendant un fonctionnement en chargement, le circuit de chargement (3) présentant un convertisseur Flyback, ainsi que
   - un circuit d'attaque (5), alimenté pendant le fonctionnement en éclairage de secours par l'unité de stockage d'énergie (4), pour faire fonctionner la source de lumière,

   une unité de commande (2) étant prévue, laquelle amène de façon sélective le convertisseur Flyback dans un fonctionnement par impulsion,

**caractérisé en ce que**
dans le fonctionnement par impulsion un commutateur (S1) du convertisseur Flyback effectue un nombre prédéterminé de processus de commutation à haute fréquence, avant qu'il prenne ensuite un état de repos plus long par rapport à la période de commutation, de sorte que dans ce fonctionnement par impulsion des périodes de commutation à haute fréquence du commutateur alternent avec des périodes pendant lesquelles le commutateur n'est pas commuté.

2. Appareil selon la revendication 1,
dans lequel le convertisseur Flyback présente une séparation de potentiel au moyen d'un transformateur (T).

3. Appareil selon la revendication 1,
l'unité de commande (2) commandant le fonctionnement par impulsion du convertisseur Flyback pendant une phase d'autodiagnostic de l'appareil.

4. Appareil selon la revendication 1 ou 3,
l'unité de commande (2) commandant le fonctionnement par impulsion du convertisseur Flyback de l'appareil lorsque la tension d'alimentation de réseau est inférieure à une valeur de seuil fixée.

5. Appareil selon l'une des revendications précédentes,
l'unité de commande (2) étant arrangée pour surveiller l'état de la tension d'alimentation de réseau (Uin) pendant le fonctionnement en chargement et pour activer le fonctionnement en éclairage de secours si un état de secours est identifié.

6. Appareil selon la revendication 5,
l'unité de commande (2) déterminant l'état de la tension d'alimentation de réseau (Uin) à l'aide de valeurs de fonctionnement de l'appareil (1) mesurées à la sortie du circuit de chargement (3).

7. Appareil selon l'une des revendications précédentes,
**caractérisé en ce que** la commande du commutateur (S1) du convertisseur Flyback est effectuée par l'intermédiaire d'un optocoupleur (6).

8. Appareil selon la revendication 7,
**caractérisé en ce que** l'unité de commande (2) détermine l'état de la tension d'alimentation de réseau (Uin) en prenant en compte un rapport cyclique (D1) pour la commande du commutateur (S1) ainsi que la tension secondaire (Uflb2) mesurée du convertisseur Flyback.

9. Appareil selon l'une des revendications 7 ou 8,
**caractérisé en ce que** l'unité de commande (2) détermine l'état de la tension d'alimentation de réseau (Uin) en prenant en compte un rapport cyclique (D1) pour la commande du commutateur (S1) ainsi que la puissance de chargement (Pflb2) pour l'unité de stockage d'énergie (4).

10. Appareil selon la revendication 9,
**caractérisé en ce que** l'unité de commande (2) détermine la puissance de chargement (Pflb2) pour l'unité de stockage d'énergie (4) par une mesure du courant (Ibat) circulant à travers l'unité de stockage d'énergie (4) et de la tension (Ubat) aux bornes de celle-ci.

11. Appareil selon l'une des revendications 7 à 10,
**caractérisé en ce que** l'unité de commande (2) détermine la tension d'alimentation de réseau (Uin) en comparant des valeurs de fonctionnement connues ou mesurées avec un tableau de valeurs se trouvant dans l'unité de commande (2).

12. Appareil selon l'une des revendications précédentes,
**caractérisé en ce que** le circuit d'attaque (5) est arrangé en contrôleur à commutateur bistable et présente un commutateur (S2) commandable commandé par l'unité de commande (2).

13. Appareil selon la revendication 12,
**caractérisé en ce que** l'unité de commande (2) commande le circuit d'attaque (5) de telle façon que la source de lumière fonctionne indépendamment de l'état de chargement de l'unité de stockage d'énergie (4) avec une puissance (Pled) constante ou un courant (Iled) constant.

14. Procédé pour faire fonctionner un appareil pour faire fonctionner une source de lumière, l'appareil (1) présentant :

    - une batterie (4),
    - un circuit de chargement (3), alimenté par une tension d'alimentation de réseau (Uin), avec un convertisseur Flyback (3), ainsi que
    - un circuit d'attaque (5), alimenté pendant un fonctionnement en éclairage de secours par la batterie (4), pour faire fonctionner la source de lumière,

le convertisseur Flyback (3) étant amené de façon sélective dans un fonctionnement par impulsion,
**caractérisé en ce que**
dans le fonctionnement par impulsion un nombre prédéterminé de processus de commutation à haute fréquence est effectué par un commutateur (S1) du convertisseur Flyback, avant que le commutateur prenne ensuite une position de repos plus longue par rapport à la période de commutation, de sorte que dans ce fonctionnement par impulsion des périodes de commutation à haute fréquence du commutateur (S1) du convertisseur Flyback (3) alternent avec des périodes pendant lesquelles le commutateur (S1) n'est pas commuté.

15. Procédé selon la revendication 14,
dans lequel le convertisseur Flyback effectue une séparation de potentiel entre la tension d'alimentation de réseau (Uin) et la batterie (4).

Fig. 1

Fig. 2

Fig. 3

Fig. 4

Fig. 5

EP 2 011 211 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5847550 A

**In der Beschreibung aufgeführte Nicht-Patentliteratur**

- **Chen et al.** A Single-Stage Electronic Ballast with Emergency Lighting Features. *Proceedings of the 18th Annual IEEE Applied Power Electronics Conference and Exposition, APEC,* 09. Februar 2003, 1185-1190

- **Chu et al.** Positive/Negative Pulse Battery Charger with Energy Feedback and Power Factor Correction. *20th Annual IEEE Applied Power Electronics Conference and Exposition (APEC 2005),* 2005, 986-990